# EUROPEAN PATENT APPLICATION

(11) **EP 2 554 439 A1**
(43) Date of publication of application: **06.02.2013**
(21) Application number: 11762386.8
(22) Date of filing: 17.02.2011
(51) Int. Cl.: B60R 21/203, B62D 1/16

(54) **AIRBAG DEVICE**

(30) Priority: 30.03.2010 JP 2010077897
(71) Applicant: Ashimori Industry Co., Ltd., Osaka-shi Osaka 550-0014 (JP)
(72) Inventor: YAMAJI Naoki, Settsu-shi Osaka 566-0001 (JP); YOSHII Nobuhiko, Settsu-shi Osaka 566-0001 (JP); YAMAUCHI Keita, Settsu-shi Osaka 566-0001 (JP)
(74) Representative: Wilhelms · Kilian & Partner Patentanwälte
(86) International application number: PCT/JP2011/053341
(87) International publication number: WO 2011/122145

(57) **Abstract**

An airbag device includes a mounting plate to which an airbag, an inflator, and a cover are secured, a locking body formed of a linear material configured to be elastically deformed into a shape in which an intermediate wire portion and a pair of side wire portions are continuous so as to form a U-like shape, and a holding member holding the locking body on the mounting plate. Each of end portions of the pair of side wire portions is formed as an inclined portion for biasing, and a pair of auxiliary biasing members respectively configured to abut against the pair of inclined portions for biasing are provided in the mounting plate. The locking body is held on the mounting plate in a state in which the pair of inclined portions for biasing respectively abut against the pair of auxiliary biasing members to bias the intermediate wire portion toward a direction of being locked with the first mounting member.

## Description

### Technical Field

The present invention relates to the technology of mounting an airbag device to a steering wheel.

### Background Art

Conventionally, Patent Document 1 discloses the technology of mounting an airbag device to a steering wheel.

According to Patent Document 1, a rib is provided in a protruding manner around the outer periphery of a holding member, and a locking wire is installed and disposed at a locking position inside the rib of the holding member in the state in which the diameter of the locking wire is entirely reduced. When three pins on the steering wheel side are locked with the locking wire, an airbag module is mounted to the steering wheel.

### Prior Art Document

### Patent Document

Patent Document 1: Japanese Patent Application Laid-Open No. 2002-2433

### Summary of the Invention

### Problem to be Solved by the Invention

In the technology disclosed in Patent Document 1, unfortunately, the rib is provided in a protruding manner around almost the entire outer periphery of the holding member for entirely reducing the diameter of the locking wire. As a result, the rib surrounding the outer periphery of the holding member causes increases in material cost and weight.

Therefore, an object of the present invention is to hold a locking body in a state to be locked with mounting members at fewer contact points.

### Means to Solve the Problem

In order to solve the above-mentioned problem, a first aspect relates to an airbag device that is mounted to a steering wheel in which a first mounting member is provided in a protruding manner, which includes: an airbag; an inflator configured to inflate and deploy the airbag; a cover covering the airbag folded; a mounting plate to which the airbag, the inflator, and the cover are secured; a locking body formed of a linear material configured to be elastically deformed into a shape in which an intermediate linear portion and a pair of side linear portions are continuous so as to form a U-like shape, in which the first mounting member is locked with the intermediate linear portion from an outer peripheral side thereof; and a holding member holding the locking body on the mounting plate, wherein: each of end portions of the pair of side linear portions is formed as an inclined portion for biasing that is inclined toward a direction in which the intermediate linear portion is locked with the first mounting member; a pair of auxiliary biasing members configured to respectively abut against a pair of the inclined portions for biasing are provided in the mounting plate; and the locking body is held on the mounting plate via the holding member in a state in which the pair of inclined portions for biasing respectively abut against the pair of auxiliary biasing members to bias the intermediate linear portion toward a direction of being locked with the first mounting member.

According to a second aspect, in the airbag device of the first aspect, the locking body is provided so as to allow a pair of second mounting members provided in the steering wheel in a protruding manner to be respectively locked with the pair of side linear portions; and a mode in which the first mounting member and the pair of second mounting members are locked with the locking body, a mode in which the pair of inclined portions for biasing abut against the pair of auxiliary biasing members, and a range in which the locking body is movable along a main surface of the mounting plate are set so as to prevent the first mounting member and the pair of second mounting members from being collectively released from the locking body upon the locking body moving along the main surface of the mounting plate.

According to a third aspect, in the airbag device of the first or second aspect, the mounting plate includes a recess that is recessed from a portion for mounting the inflator, and the locking body is provided in the recess; and a movable range of the locking body in the recess along the main surface of the mounting plate is restricted such that at least one of the first mounting member and the pair of second mounting members is kept in a state of being locked with the locking body.

According to a fourth aspect, in the airbag device of any one of the first to third aspects, the locking body is provided so as to allow the pair of second mounting members provided in the steering wheel in a protruding manner to be respectively locked with the pair of side linear portions; each of the pair of side linear portions includes a linear portion and the inclined portion for biasing, the linear portions being parallel to each other in the state of being locked with the pair of second mounting members; and the pair of second mounting members are configured to be respectively locked with the linear portions of the pair of side linear portions.

### Effects of the Invention

According to the first aspect, the pair of inclined portions for biasing of the locking body abut against the pair of auxiliary biasing members, so that the intermediate linear portion is biased toward the direction of being locked with the first mounting member. The biasing force thereof enables to hold the intermediate linear portion and the first mounting member in a locked state. Therefore, differently from a conventional case, it is not required to hold the locking body by means of a rib formed so as to surround an outer periphery thereof, which enables to hold the locking body at fewer contact positions to be locked with the first mounting member. In addition, the locking body is held at fewer contact positions, resulting in an increase of the degree of freedom in design of an airbag device as well as a reduction of material cost.

According to the second aspect, even in a case where the locking body moves along the main surface of the mounting plate, the locking body is held to be locked with at least one of the first mounting member and the pair of second mounting members. This enables to keep the state in which the airbag device is mounted more reliably.

According to the third aspect, the movable range of the locking body is restricted in the recess, whereby the locking body is kept to be locked with at least one of the first mounting member and the pair of second mounting members. This enables to keep the state in which the airbag device is mounted more reliably.

According to the fourth aspect, the pair of second mounting members are locked with the linear portions that are parallel to each other. In addition, the pair of second mounting members are locked with the locking body from the direction different from the direction in which the first mounting member is locked, and further, the locking body is held in at least three positions of the first mounting member and the pair of second mounting members. This enables to hold the locking body in a stable manner.

### Brief Description of Drawings

FIG. 1 is an exploded perspective view showing an airbag device according to an embodiment and a steering wheel.
FIG. 2 is a side view showing a mounting member.
FIG. 3 is a cross-sectional view showing the mounting member.
FIG. 4 is an explanatory view showing a procedure of mounting a cap member to a mounting body member.
FIG. 5 is another explanatory view showing the procedure of mounting the cap member to the mounting body member.
FIG. 6 is still another explanatory view showing the procedure of mounting the cap member to the mounting body member.
FIG. 7 is yet still another explanatory view showing the procedure of mounting the cap member to the mounting body member.
FIG. 8 is an exploded perspective view showing an airbag, a cover, and a mounting plate of the airbag device.
FIG. 9 is a front view showing the mounting plate, a holding member and a locking body.
FIG. 10 is a schematic front view showing the mounting plate.
FIG. 11 is a front view showing the locking body.
FIG. 12 is an exploded perspective view showing the mounting plate, the holding member, and an auxiliary biasing member.
FIG. 13 is an explanatory view showing an operation of the locking body.
FIG. 14 is a front view showing a state in which the mounting plate is mounted to the steering wheel.
FIG. 15 is a cross-sectional view taken along a line XV-XV of FIG. 14.
FIG. 16 is an explanatory view showing an operation in which the mounting member is locked with the locking body.
FIG. 17 is another explanatory view showing the operation in which the mounting member is locked with the locking body.
FIG. 18 is an explanatory view showing a state in which the mounting member is locked with the locking body upon movement of the locking body.
FIG. 19 is another explanatory view showing the state in which the mounting member is locked with the locking body upon movement of the locking body.
FIG. 20 is an explanatory view showing an example of consideration.
FIG. 21 shows the results of consideration.

### Embodiment for Carrying Out the Invention

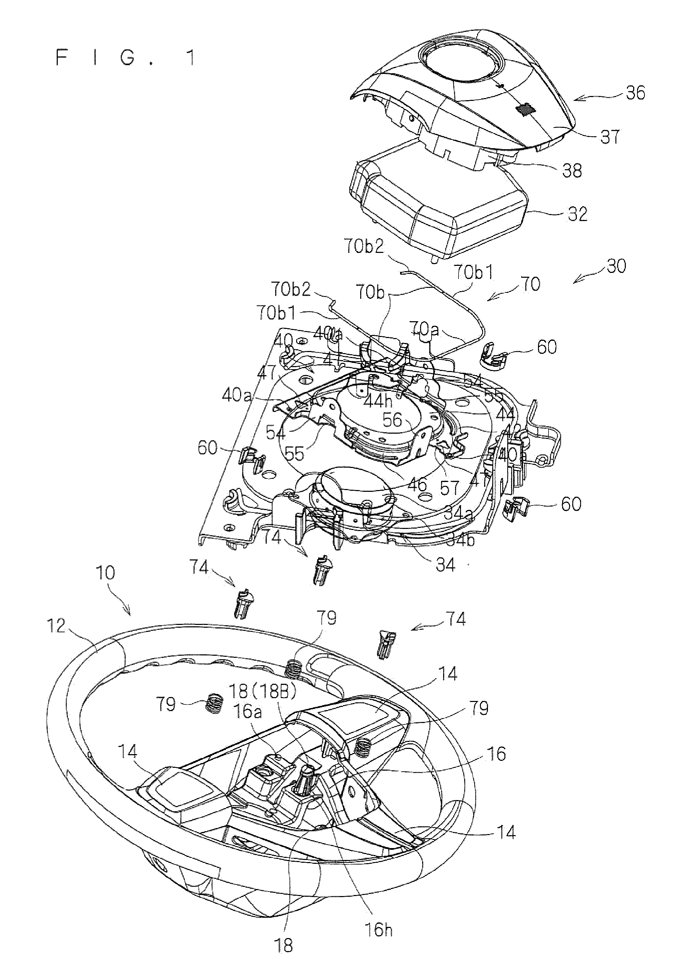

Hereinafter, a mounting part structure for an airbag device according to an embodiment is described. FIG. 1 is an exploded perspective view showing a steering wheel 10 and an airbag device 30.

The mounting part structure for the airbag device 30 is the structure for mounting the airbag device 30 to the steering wheel 10.

The steering wheel 10 serves to steer a vehicle and includes a wheel main body 12, spokes 14, and a core member 16 as a central member. The wheel main body 12 is a portion that receives a steering force by a person. The spoke 14 is formed into a rod shape extending from an inner peripheral portion of the wheel main body 12 toward the center thereof, and is connected to a steering shaft at the center of the wheel main body 12. Three spokes 14 are provided in this case, which may be, for example, two.

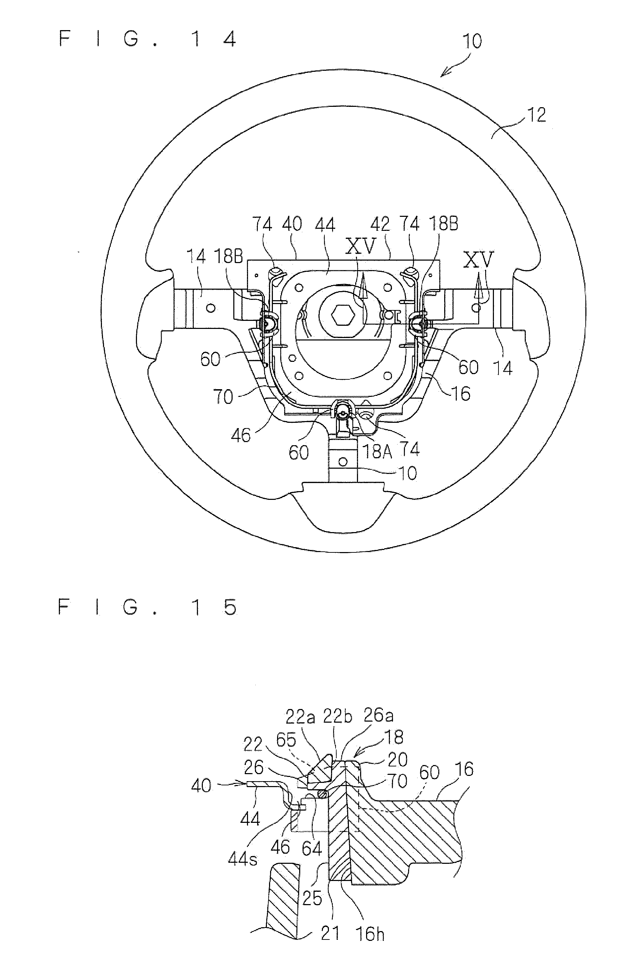

The core member 16 is exposed approximately at the center portion of the steering wheel 10. The core member 16 is formed of a conductive member such as metal. Mounting members 18 are provided to the core member 16 in a protruding manner. In this case, three mounting members 18 are provided around the center of the steering wheel 10 (FIG. 1 shows only a part thereof). The three mounting members 18 include one locked with an intermediate wire portion 70a of a locking body 70 described below and ones locked with side wire portions 70b of the locking body 70 described below. In the description below, the mounting members are referred to as the mounting members 18 in a case where the configuration common to the three mounting members is described, whereas the mounting member locked with the intermediate wire portion 70a of the locking body 70 and the mounting members locked with the side wire portions 70b of the locking body 70 are referred to as a first mounting member 18A and second mounting members 18B, respectively, in a case where a distinction is made therebetween (see FIG. 14). The mounting member 18 locked with the locking body 70 described below may be only the first mounting member 18A locked with the intermediate wire portion 70a, and further, one or a plurality of mounting members 18 may be provided.

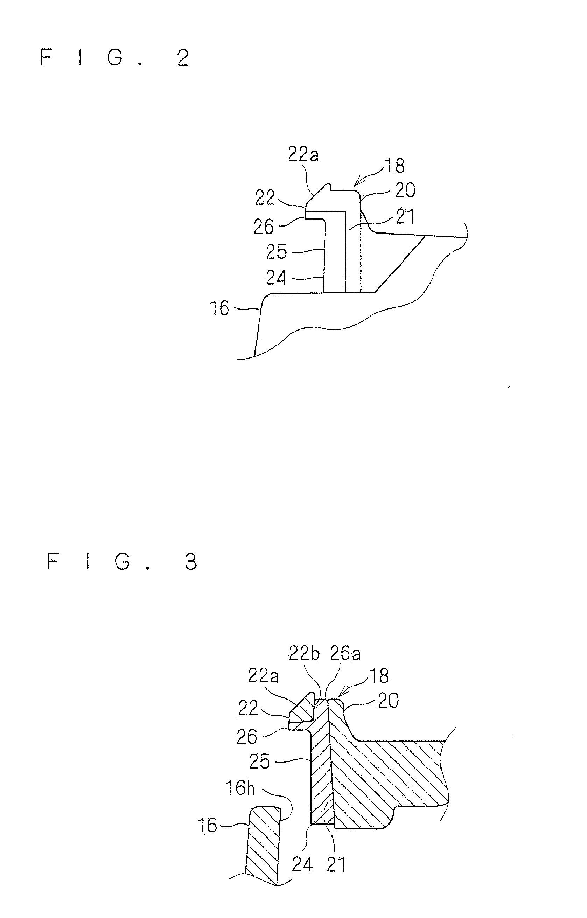

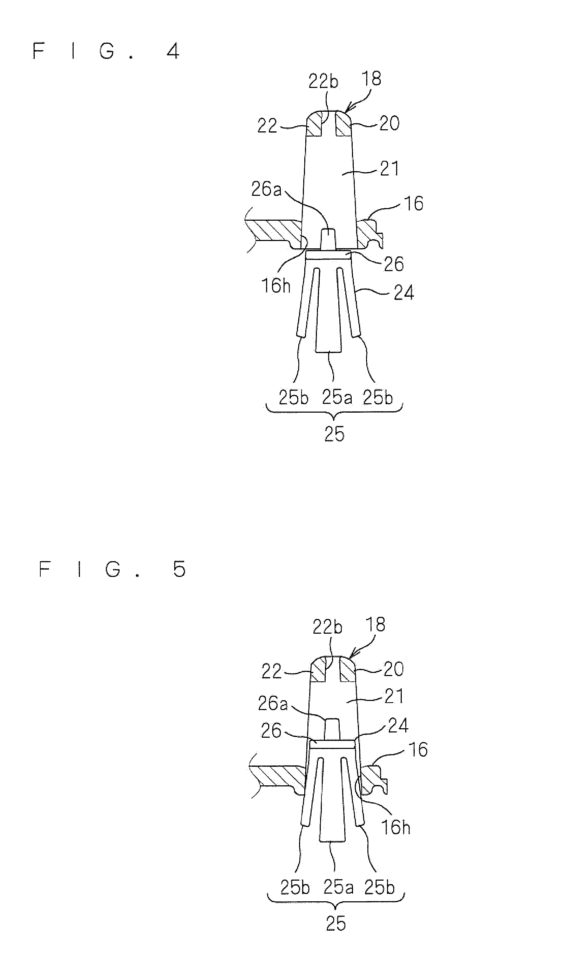

FIG. 2 is a side view showing the mounting member 18, and FIG. 3 is a cross-sectional view showing the mounting member 18. FIGS. 4 to 7 are explanatory views showing the procedure of mounting a cap member 24 to a mounting body member 20. Note that the cap member 24 may not be provided.

The mounting member 18 is configured so as to be locked with the locking body 70 described below. More specifically, the mounting member 18 includes the mounting body member 20 integrally formed with the core member 16 and the cap member 24 mounted to the mounting body member 20.

The mounting body member 20 includes a column part 21 and a locking protrusion 22. The column part 21 is formed so as to protrude from the core member 16 toward the front side of the steering wheel 10 (airbag device 30 side). The locking protrusion 22 is provided at the distal end of the column part 21 in a protruding manner. In this case, the locking protrusion 22 is formed to protrude toward the inner peripheral side of the steering wheel 10. Provided at the distal end portion of the locking protrusion 22 on the airbag device 30 side is an inclined surface 22a inclined such that a height dimension thereof becomes gradually smaller toward the center of the steering wheel 10. In the state in which the airbag device 30 is mounted described below, the distal end portion of the mounting member 18 is disposed in an airbag housing space. In this state, the inclined surface 22a functions as an interference suppressing part whose height dimension becomes gradually smaller toward the inside of the airbag housing space. The inclined surface 22a is not necessarily required to be flat but may be curved.

A through hole 16h is formed at the position in the core member 16, which is located in the proximal-end-side portion of the mounting body member 20 and is opposed to the locking protrusion 22, and a recess 22b is formed in an inwardly facing surface of the locking protrusion 22. The cap member 24 is, for example, mounted with the through hole 16h and the recess 22b. Note that the recess 22b passes through the locking protrusion 22 in this case, which is not necessarily required to pass therethrough.

The cap member 24 is formed of a non-conductive member such as a resin, and is mounted to the mounting body member 20 so as to cover the inner corner portion between the column part 21 and the locking protrusion 22 of the mounting body member 20. More specifically, the cap member 24 includes a side plate part 25 covering the surface of the column part 21 on the side on which the locking protrusion 22 protrudes and an end plate part 26 covering the inner surface of the locking protrusion 22. The side plate part 25 includes a center plate part 25a having an elongated plate shape and a pair of slip-off prevention pieces 25b provided at both side portions of the center plate part 25a. The slip-off prevention piece 25b extends while gradually becoming wider from the end portion of the center plate part 25a on the end plate part 26 side toward the end portion on the other side. The pair of slip-off prevention pieces 25b are elastically deformed to become narrow, to thereby pass through the through hole 16h. Meanwhile, the pair of slip-off prevention pieces 25b become widened by the elastic restoring force thereof, whereby the end portions of the pair of slip-off prevention pieces 25b can be engaged with the peripheral portion of the through hole 16h. Further, formed on the outer surface of the end plate part 26 is a protrusion 26a that can be fitted into the recess 22b of the locking protrusion 22.

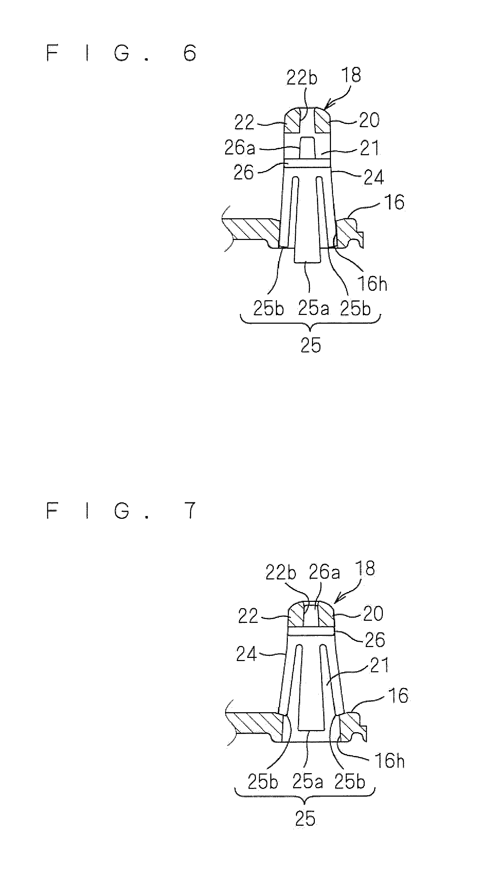

When the cap member 24 is inserted into the through hole 16h from the proximal end side of the mounting body member 20 (see FIG. 4), the outer surfaces of the pair of slip-off prevention pieces 25b come into sliding contact with the periphery of the through hole 16h, so that the pair of slip-off prevention pieces 25b are elastically deformed toward the center plate part 25a side (see FIG. 5). Accordingly, the pair of slip-off prevention pieces 25b become narrow, which enables the cap member 24 to pass through the through hole 16h (see FIG. 6). Then, the cap member 24 passes through the through hole 16h, whereby the pair of slip-off prevention pieces 25b elastically return to be engaged with the peripheral portion of the through hole 16h, and the protrusion 26a is fitted into the recess 22b (see FIG. 7). As a result, the cap member 24 is mounted and secured to the mounting body member 20 at a fixed position.

A projection portion that prevents a locking body from becoming detached may be formed at the distal end portion of the end plate part 26 of the mounting member 18.

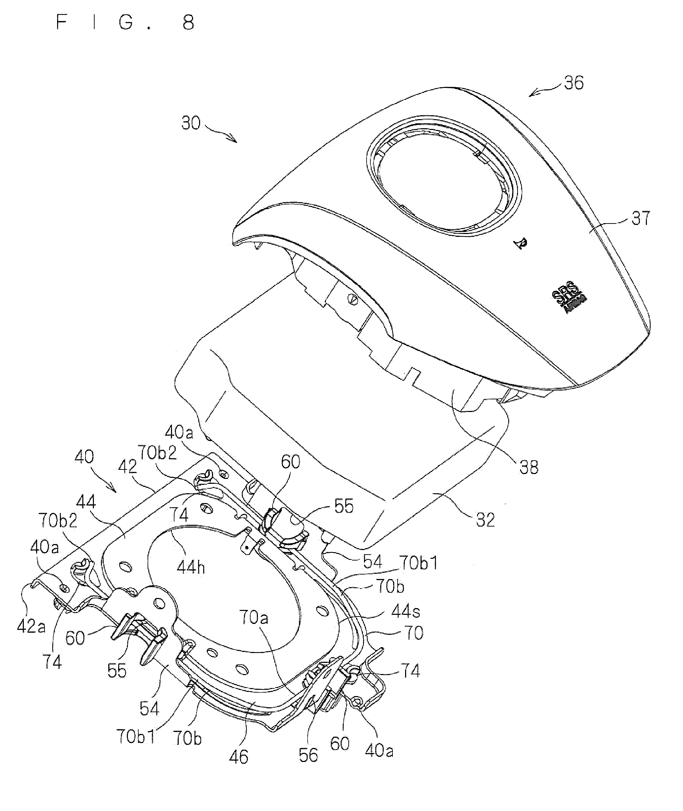

FIG. 8 is an exploded perspective view showing an airbag 32, a cover 36, and a mounting plate 40 of the airbag device 30. As shown in FIGS. 1 and 8, the airbag device 30 includes the airbag 32, the inflator 34, the cover 36, and the mounting plate 40.

The airbag 32 is formed of a fabric or the like into a bag shape, and is mounted to the mounting plate 40 in the folded state together with the inflator 34.

The inflator 34 serves to inflate and deploy the airbag 32. In this case, the inflator 34 includes an inflator body part 34a having a short cylindrical shape and a mounting flange 34b formed on the outer periphery of the inflator body part 34a (see FIG. 1). The mounting flange 34b is formed into a plate shape extending such that the outer perimeter thereof has an approximately square shape, and screw holes are formed at four corner portions thereof. The inflator 34 is mounted and secured to the mounting plate 40 via the mounting flange 34b. An ignition device, a gas generator, and the like are incorporated in the inflator body part 34a. Upon reception of, for example, a detection signal from an impact detection part or the like in a vehicle collision, the ignition device ignites the gas generator. Accordingly, the gas generator bums, and the gas generated as a result of the burning is supplied into the airbag 32.

The cover 36 is a member formed of a resin or the like, which is secured to the mounting plate 40 so as to cover the airbag 32. In this case, the cover 36 includes a cover body part 37 having a gently curved shape and an enclosure part 38 provided on the back surface side of the cover body part 37. The enclosure part 38 and the mounting plate 40 are secured to each other by, for example, riveting. Further, the space for housing the folded airbag 32 is formed in the space surrounded by the cover body part 37 and the enclosure part 38. Tear lines that are easily torn upon reception of the force for inflating and deploying the airbag 32 are formed in the cover body part 37. The body part 37 is disposed such that the surface thereof is continuous from the surfaces of the spokes 14 in the state where the airbag device 30 is mounted to the steering wheel 10.

The mounting plate 40 is a member formed of a metal plate or the like, which is a member to which the airbag 32, the inflator 34, and the cover 36 are mounted. The airbag 32, the inflator 34, and the cover 36 are directly mounted to the mounting plate 40 in this case, which may be indirectly secured thereto via, for example, another bracket. The mounting plate 40 is described below in more detail.

When the airbag 32 is inflated by a gas supply from the inflator 34, the cover 36 is torn and opened upon reception of the force for inflating and deploying the airbag 32. As a result, the airbag 32 is inflated and deployed into a bag shape between the steering wheel 10 and a driver.

The configuration for mounting the airbag device 30 to the steering wheel 10 is described.

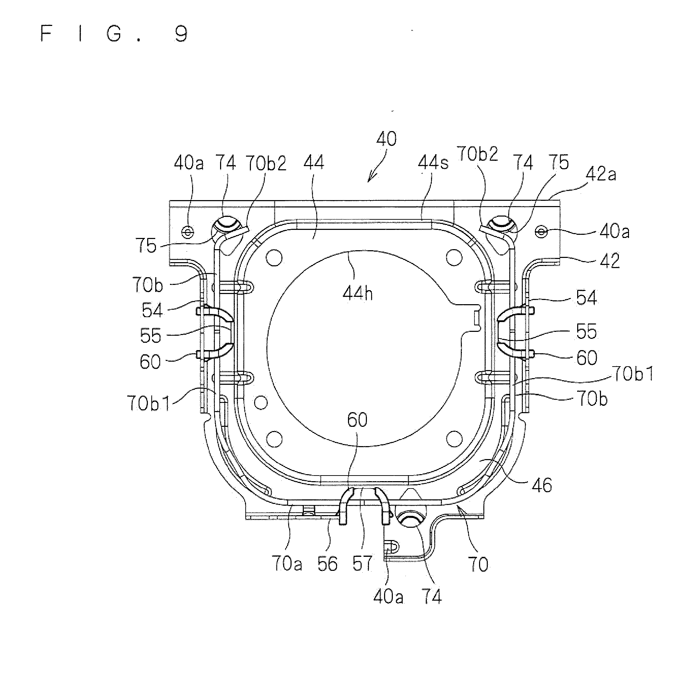

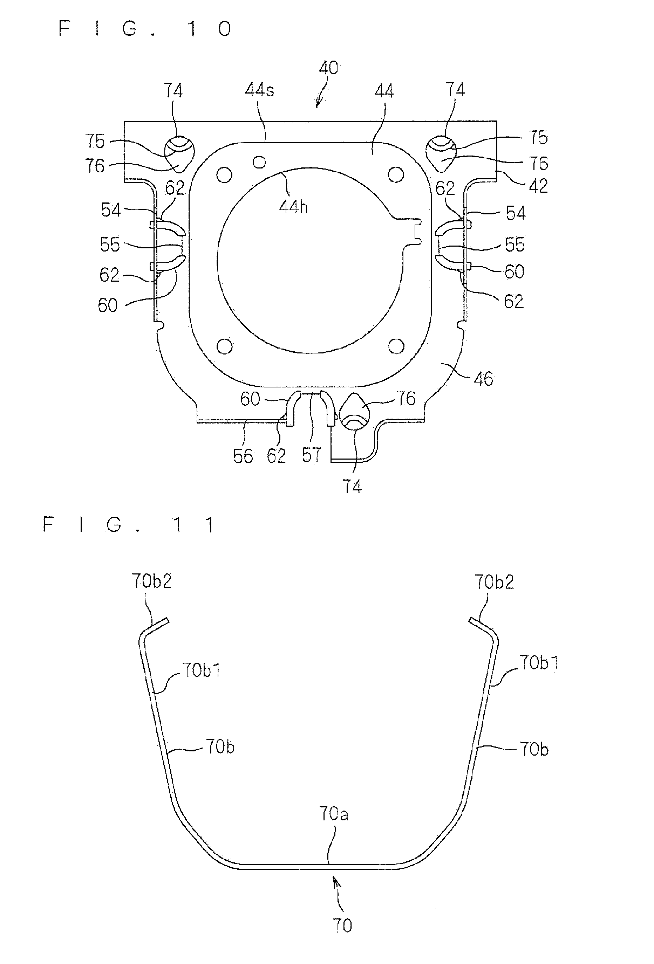

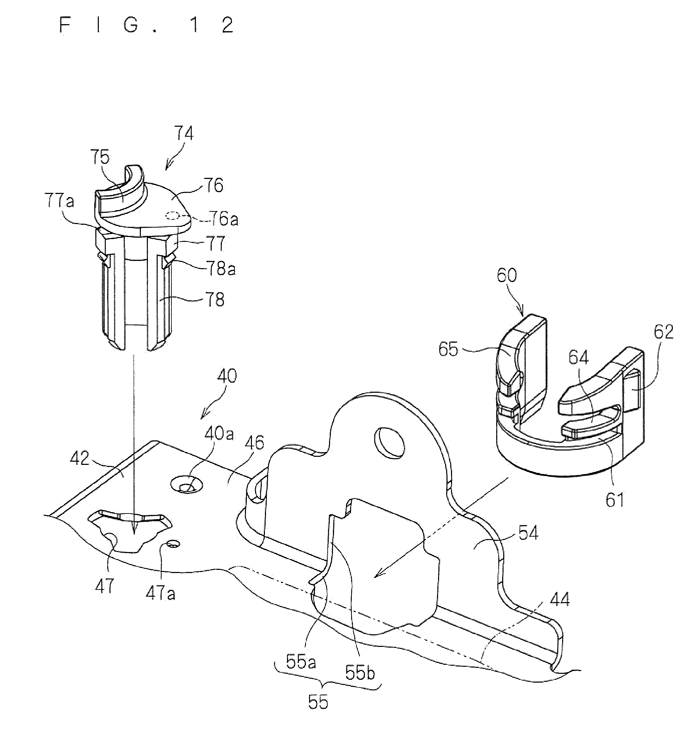

FIG. 9 is a front view showing the mounting plate 40, the holding members 60, and the locking body 70, FIG. 10 is a schematic front view showing the mounting plate 40, FIG. 11 is a front view showing the locking body 70, and FIG. 12 is an exploded perspective view showing the mounting plate 40, the holding member 60, and an auxiliary biasing member 74.

That is, the locking body 70 is held on the mounting plate 40 of the airbag device 30 via the holding members 60. Then, the mounting members 18 are locked with the locking body 70 in a detachable manner, whereby the airbag device 30 is mounted to the steering wheel 10.

More specifically, the mounting plate 40 is a member formed by, for example, pressing a metal plate, and includes a main mounting plate part 42, side securing plate parts 54, a bottom securing plate part 56, and a top securing plate part 42a.

The main mounting plate part 42 is formed into a plate shape large enough to block the opening of the enclosure part 38 of the cover 36. Formed at the center portion of the main mounting plate part 42 is an inflator disposing hole 44h in which the inflator body part 34a can be disposed. An approximately square-shaped area on the outer periphery of the inflator disposing hole 44h is formed as an inflator mounting plate part 44 protruding toward the airbag 32 side via a step 44s, beyond the outer periphery of the approximately square-shaped area. In the state in which the inflator body part 34a is disposed in the inflator disposing hole 44h, the mounting flange 34b is overlaid on the inflator mounting plate part 44 and is secured thereto by, for example, screwing, so that the inflator 34 is mounted and secured to the mounting plate 40.

The outer-perimeter-side portion of the inflator mounting plate part 44 is formed as a recess 46 that is recessed from the surface of the inflator mounting plate part 44 on the airbag 32 side toward the steering wheel 10 side via the step 44s. The locking body 70 is disposed in the recess 46. In this case, the recess 46 is formed so as to surround the inflator disposing hole 44h from four sides. Needless to say, it suffices that the recess is formed in the area that surrounds the inflator disposing hole from at least two directions. It is preferable that the depth dimension of the recess 46 be set to be larger (in this case, much larger) than the radius of the locking body 70, and that the locking body 70 be provided such that more than a half of a cross section thereof should not protrude from the surface of the inflator mounting plate part 44. More preferably, the depth dimension of the recess 46 is set to be larger (in this case, much larger) than the diameter of the locking body 70, and the entire locking body 70 does not protrude from the surface of the inflator mounting plate part 44 but is located at a position below the front surface of the inflator mounting plate part 44 on the recess 46 side. Needless to say, it is not necessarily required to form the recess 46. The main mounting plate part may be formed into a flat plate shape.

Here, the locking body 70 is formed by bending and deforming a linear material that can be elastically deformed, more specifically, a metal wire that can be elastically deformed, and is formed into a shape in which the intermediate wire portion 70a being the intermediate linear portion and the side wire portions 70b being a pair of side linear portions are continuous so as to form a U-shape. The first mounting member 18A is locked with the intermediate wire portion 70a from the outer peripheral side thereof. In this case, the first mounting member 18A is locked with the intermediate wire portion 70a from the outer direction approximately orthogonal to the intermediate wire portion 70a along the main surface of the main mounting plate part 42.

The second mounting members 18B are respectively locked with the pair of side wire portions 70b from the outer peripheral side thereof. Each of the pair of side wire portions 70b includes a linear portion 70b1 and an inclined portion for biasing 70b2. In the initial state before the locking body 70 is mounted to the mounting plate 40, the linear portions 70b1 of the pair of side wire portions 70b extend to be apart from each other toward the distal end side thereof. Then, the locking body 70 is mounted to the mounting plate 40 in the state in which the pair of side wire portions 70b are brought closer to each other, whereby the linear portions 70b1 of the pair of side wire portions 70b become parallel to each other. In this state, the pair of second mounting members 18B are respectively locked with the linear portions 70b1 of the pair of side wire portions 70b.

The inclined portions for biasing 70b2 that are inclined in a direction in which the pair of side wire portions 70b become closer to each other toward the distal end side thereof are provided at the distal end portions of the pair of side wire portions 70b. It could be said that the inclined portion for biasing 70b2 is inclined with respect to the direction in which the intermediate wire portion 70a is locked with the first mounting member 18A. The force for biasing the intermediate wire portion 70a toward the direction to be locked with the first mounting member 18A is caused to act by bringing the inclined portions for biasing 70b2 into sliding contact with the auxiliary biasing members 74 in the state in which the locking body 70 is mounted to the mounting plate 40. This is further described below.

The locking body 70 is provided in the recess 46, whereby it is possible to prevent the locking body 70 from protruding from the mounting plate 40 as much as possible. This prevents a hand or the like of an operator from inadvertently coming into contact with the locking body 70 during an operation of mounting the airbag 32, the inflator 34, the cover 36, and the like to the mounting plate 40. In particular, more than a half of the cross section of the locking body 70 does not protrude from the surface of the inflator mounting plate part 44 on the airbag 32 side, which prevents a hand or the like of an operator from coming into contact with the locking body 70 more reliably. Accordingly, it is possible to prevent the locking body 70 from, for example, becoming detached during an assembly operation, which allows smooth execution of the assembly operation.

Further, the movable range of the locking body 70 along the main surface direction of the main mounting plate part 42 is restricted by disposing the locking body 70 in the recess 46. The preferable movable range of the locking body 70 is described below.

The recess 46 is provided so as to surround the inflator disposing hole 44h. This enables to dispose the locking body 70 so as to surround the inflator 34 and lock the mounting members 18 with the locking body at a plurality of positions (in this case, three positions). This further stabilizes the state in which the airbag device 30 is mounted.

The locking body 70 is provided on the airbag 32 side with respect to the mounting plate 40, and accordingly, the external force by a hand or the like of an operator is unlikely to be exerted on the locking body 70 after the airbag 32, the inflator 34, the cover 36, and the like are mounted to the mounting plate 40 and the airbag device 30 is installed. As a result, the locking body 70 is unlikely to become detached. In addition, the locking body 70 is provided in the recess 46 of the mounting plate 40, which is recessed from the surface of the inflator mounting plate part 44 toward the steering wheel 10 side. This makes it easy to sufficiently secure the space for housing the airbag 32 between the mounting plate 40 and the cover 36. Moreover, the airbag 32 is unlikely to interfere with the locking body 70 disposed in the recess 46 when being inflated and deployed, and accordingly, the airbag 32 is inflated and deployed stably.

The locking body interferes with the folded airbag if the locking body is provided on the airbag side, and thus, a fear arises that the space for enabling elastic deformation of a locking body that is required for mounting/demounting a locking body to/from the mounting member cannot be secured. That is, there arises a fear that a locking body and a folded airbag may interfere with each other and the locking body may not be deformed, which prohibits smooth mounting/demounting of the locking body to/from a mounting member. In the present embodiment, meanwhile, the locking body 70 is provided in the recess 46, and thus, is unlikely to interfere with the folded airbag 32. This allows smooth deformation of the locking body 70. Therefore, the mounting member 18 and the locking body 70 can be mounted/demounted easily.

The configuration for holding the locking body 70 on the mounting plate 40 is further described below.

The pair of side securing plate parts 54 are provided in both side portions of the main mounting plate part 42, and the bottom securing plate part 56 is provided to the bottom of the main mounting plate part 42. The pair of side securing plate parts 54 and the bottom securing plate part 56 are provided so as to extend along the enclosure part 38 toward the cover 36 side. The pair of side securing plate parts 54 and the bottom securing plate part 56 are secured to the enclosure part 38 by, for example, riveting, so that the mounting plate 40 and the cover 36 are secured to each other. Note that the top securing plate part 42a that extends toward the side opposite to the cover 36 is also provided to the top of the main mounting plate part 42, and the top securing part 42a is also secured to the cover 36 by riveting, screwing or the like.

A side holding member mounting recess 55 is formed in each portion ranging from the side portion of the main mounting plate part 42 to the side securing plate part 54 (see FIG. 12). A portion 55a of the side holding member mounting recess 55 on the main mounting plate part 42 side is formed into a cut-out hole shape into which the mounting member 18 can be inserted, and a portion 55b of the side holding member mounting recess 55 on the side securing plate part 54 side is formed into a cut-out hole shape into which the holding member 60 can be inserted. Further, a bottom holding member mounting recess 57 is formed in a lower portion of the main mounting plate part 42. The bottom holding member mounting recess 57 is formed into a cut-out shape into which the mounting member 18 can be inserted. The side edge on one side of the bottom securing plate part 56 extends toward the cover 36 side so as to be continuous from the side portion on one side of the bottom holding member mounting recess 57. The pair of side holding member mounting recesses 55 and the bottom holding member mounting recess 57 are formed at the positions corresponding to the three mounting members 18.

The holding member 60 is a member formed of a non-conductive material such as a resin, and is configured to hold the locking body 70 on the mounting plate 40 by holding the intermediate portion of the locking body 70 in the extending direction (portion except for the inclined portion for biasing 70b2). More specifically, the holding member 60 is formed into a semi-cylindrical shape into which the mounting member 18 can be inserted along an axis direction. A securing groove 61 corresponding to the thickness of the main mounting plate part 42 is formed in the outer peripheral portion of the holding member 60, and locking protrusions 62 are formed on both outer peripheral side portions of the holding member 60. The locking protrusion 62 is formed as a protrusion having a height dimension gradually increasing from the center of the outer periphery of the holding member 60 toward the end portion side thereof.

The holding members 60 are respectively inserted into the pair of side holding member mounting recesses 55 and the bottom holding member mounting recess 57 from the outside. Then, the perimeter portion of the portion 55a of the side holding member mounting recess 55 on the main mounting plate part 42 side or the perimeter portion of the bottom securing plate part 56 is fitted into the securing groove 61 of the holding member 60. The locking protrusions 62 are locked with the both edges of the portions 55b of the side holding member mounting recess 55 on the side securing plate part 54 side or the side edge on one side of the bottom securing plate part 56 from the inside. Accordingly, the holding members 60 are mounted and secured to the mounting plate 40.

In this mounting state, the inner space of the holding member 60 is located approximately at the same position as the portion 55a of the side holding member mounting recess 55 on the main mounting plate part 42 side or the bottom holding member mounting recess 57, in front view of the mounting plate 40. Accordingly, a plurality of mounting members 18 can be collectively inserted into the corresponding holding members 60.

Formed in the outer peripheral portion of each holding member 60 is a locking body holding groove 64 into which the locking body 70 can be inserted. It is preferable that the locking body holding groove 64 have approximately the same groove width as the diameter of the locking body 70 so as to hold the locking body 70 without rattling as little as possible in the orthogonal direction to the surface of the recess 46. The locking body holding groove 64 is formed at a position apart from (in this case, at a position slightly apart from) the surface of the recess 46 on the airbag 32 side in the state in which the holding member 60 is mounted to the mounting plate 40. The locking body 70 inserted into the locking body holding groove 64 is held in non-contact with the surface of the recess 46 on the airbag 32 side.

One end portion of the holding member 60 is disposed so as to protrude into the airbag housing space between the mounting plate 40 and the cover 36 in the state in which the holding member 60 is mounted. Then, the distal end portion of the portion of the holding member 60, which is disposed so as to protrude, is formed as an inclined surface 65 to be inclined having a height dimension gradually becoming smaller toward the inside of the airbag housing space. The inclined surface 65 is a portion having the function as an interference suppressing part, similarly to the inclined surface 22a of the mounting member 18. The inclined surface 65 is not necessarily required to be flat but may be curved.

That is, if the airbag 32 that is inflated and deployed in the airbag housing space comes into contact with the mounting members 18 and the holding members 60, the airbag 32 is guided toward the cover 36 side by the inclined surfaces 22a and the inclined surfaces 65. This prevents the interference between the airbag 32, and the mounting members 18 and the holding members 60. This stabilizes the operation of deploying the airbag 32.

The pair of auxiliary biasing members 74 that can respectively abut against the pair of inclined portions for biasing 70b2 are provided to the mounting plate 40. The auxiliary biasing members 74 are secured to the mounting plate 40 at the positions so as to come into sliding contact with the pair of inclined portions for biasing 70b2 of the locking body 70.

That is, auxiliary biasing member securing holes 47 are formed at the positions in the mounting plate 40 that correspond to the pair of inclined portions for biasing 70b2 of the locking body 70. In this case, the auxiliary biasing member securing hole 47 is formed into a hole shape obtained by cutting a vertex of a triangle. A rotation prevention recess 47a is formed around the outer periphery of the auxiliary biasing member securing hole 47 (see FIG. 12).

The auxiliary biasing member 74 is a long member formed of a resin or the like, and has a configuration in which a sliding part 75, a plate part 76, a locking part 77, and a spring securing part 78 are provided from one end to the other end thereof (see, particularly, FIG. 12).

In this case, the plate part 76 is formed into a plate shape, in this case, a teardrop shape in which one end thereof has a round shape and the other end thereof is pointed, and is disposed in the periphery of the auxiliary biasing member securing hole 47 on the airbag 32 side. Formed on the surface of the plate part 76 on the side to be in contact with the mounting plate 40 is a rotation prevention protrusion 76a that can be fitted into the rotation prevention recess 47a.

The sliding part 75 is formed into an arced wall shape, and is provided in a protruding manner in a circular portion on one end side of the plate part 76, with the protruding-side portion thereof being directed to the pointed portion on the other end side of the plate part 76.

The locking part 77 is formed into a plate shape (plate shape obtained by cutting a vertex of a triangle) that can be inserted into the auxiliary biasing member securing hole 47. Formed between the locking part 77 and the plate part 76 is a gap 77a into which the peripheral portion of the auxiliary biasing member securing hole 47 of the mounting plate 40 can be wedged.

The spring securing part 78 is formed into a long shape so as to extend from the locking part 77 toward the side opposite to the sliding part 75. The spring securing part 78 has a configuration obtained by splitting a tubular member in three in this case, which is not necessarily required. In addition, a projection 78a that can be locked with a spring 79 is formed at the proximal end portion of the spring securing part 78. The spring 79 is fitted onto the spring securing part 78, so that the spring 79 is locked with and secured to the projection 78a in the state where one end of the spring 79 abuts against the locking part 77.

The auxiliary biasing member 74 is secured to the mounting plate 40 as described below. That is, the locking part 77 and the spring securing part 78 of the auxiliary biasing member 74 are inserted into the auxiliary biasing member securing hole 47 from the airbag 32 side. Then, the locking part 77 is caused to pass through the auxiliary biasing member securing hole 47, and then, the auxiliary biasing member 74 is appropriately rotated, so that the periphery of the auxiliary biasing member securing hole 47 is sandwiched between the plate part 76 and the locking part 77. On this occasion, the pointed portion on the other end side of the plate part 76 and the protruding-side portion of the sliding part 75 are directed toward the side wire portion 70b (downwardly). As a result, the pointed portion on the other end side of the plate part 76 is configured so as to be disposed between the recess 46 and the inclined portion for biasing 70b2, and the protruding-side portion of the sliding part 75 is configured so as to come into sliding contact with the outwardly facing portion of the inclined portion for biasing 70b2. Therefore, the inclined portion for biasing 70b2 is allowed to smoothly come into sliding contact with the protruding-side portion of the sliding part 75 irrespective of the position of the inclined portion for biasing 70b2 with respect to the auxiliary biasing member 74 or a position change thereof. In this securing state, the rotation prevention protrusion 76a formed on the plate part 76 is fitted into the rotation prevention recess 47a formed in the mounting plate 40. This enables the positioning when the auxiliary biasing member 74 is installed and prevents the auxiliary biasing member 74 from rotating after being installed.

The auxiliary biasing member 74 is secured to the mounting plate 40 in this manner, and then, the spring 79 is mounted and secured to the spring securing part 78. In this case, the auxiliary biasing member 74 is mounted also to the lower portion of the mounting plate 40. The auxiliary biasing member 74 provided at this position mainly serves to support the spring 79 at this position.

The locking body 70 is held on the mounting plate 40 by the holding members 60 as described below. The locking body 70 is disposed in the recess 46 of the mounting plate 40. In this state, the holding members 60 are inserted into the pair of side holding member mounting recesses 55 from the outside while inserting the locking body 70 into the locking body holding grooves 64 of the holding members 60. Then, the pair of side wire portions 70b are brought closer to each other, whereby the reaction thereof causes the force for making the pair of side wire portions 70b apart from each other to act. This force acts as the force in the direction in which the pair of side wire portions 70b of the locking body 70 are locked with the second mounting members 18B. Similarly, when the holding member 60 is inserted into the bottom holding member mounting recess 57 from the outside while inserting the locking body 70 into the locking body holding grooves 64 of the holding members 60, the intermediate wire portion 70a is pushed toward the portion between the pair of side wire portions 70b, and the pair of inclined portions for biasing 70b2 are pushed into the pair of auxiliary biasing members 74. Accordingly, the pair of inclined portions for biasing 70b2 are pushed against the pair of auxiliary biasing members 74 to come into sliding contact therewith along the linear portions 70b1 and, at the same time, the entire locking body 70 is elastically deformed. The forces caused by the reaction, that is, the force for making the pair of side wire portions 70b apart from each other and the force for returning the entire locking body 70 to the original shape along the direction of the linear portion 70b1 act as the forces in the direction in which the intermediate wire portion 70a is locked with the first mounting member 18A. As a result, the locking body 70 is held on the mounting plate 40 on the airbag 32 side in the state in which the intermediate wire portion 70a is inserted into and held by the locking body holding groove 64 of the holding member 60 in the lower portion of the mounting plate 40 and the pair of side wire portions 70b are inserted into and held by the locking body holding grooves 64 of the holding members 60 on the both sides of the mounting plate 40. In this state, the locking body 70 is held on the mounting plate 40 via the holding members 60 in the state in which the intermediate wire portion 70a is biased in the direction to be locked with the first mounting member 18A due to the sliding contact between the pair of inclined portions for biasing 70b2 and the pair of auxiliary biasing members 74.

In this state, the locking body 70 is held on the mounting plate 40 in a non-contact manner by the holding members 60. Further, a more reliable non-contact state between the locking body 70 and the mounting plate 40 is kept also by the auxiliary biasing members 74.

Needless to say, the locking body 70 may be held on the mounting plate 40 after mounting the holding members 60 to the mounting plate 40. In this case, in the state in which the pair of side wire portions 70b are forced to be closer to each other, the intermediate wire portion 70a of the locking body 70 is inserted into the locking body holding groove 64 of the holding member 60 mounted to the lower portion of the mounting plate 40, and the pair of side wire portions 70b thereof are inserted into the locking body holding grooves 64 of the holding members 60 mounted to the both sides of the mounting plate 40. Then, it suffices that the force for pushing the pair of side wire portions 70b to be closer to each other is released.

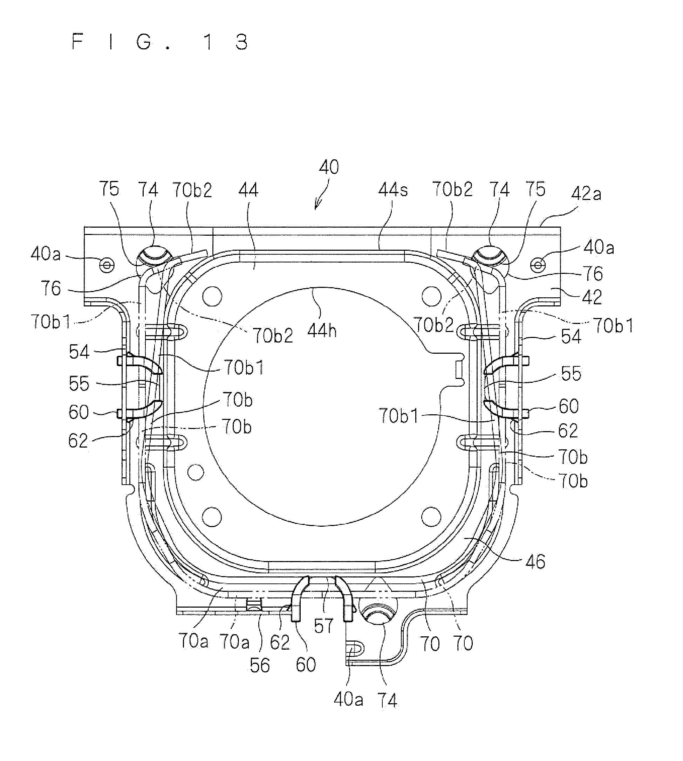

FIG. 13 is an explanatory view showing the operation of the locking body 70. FIG. 13 shows the locking body 70 in a normal state by a chain double-dashed line and the locking body 70 moved upwardly by a solid line.

First, in the normal mounting state of the locking body 70, the inclined portions for biasing 70b2 are in contact with the protruding-side portions of the sliding parts 75. The locking body 70 is moved upwardly in this state, whereby the inclined portions for biasing 70b2 are pulled inwardly while being in sliding contact with the protruding-side portions of the sliding parts 75. As a result, the pair of side wire portions 70b are pushed to be closer to each other against the elastic force of the locking body 70 itself. Then, the force for upwardly moving the locking body 70 is released, whereby the pair of side wire portions 70b are caused to be apart from each other by the elastic force of the locking body 70 itself. This brings the inclined portions for biasing 70b2 into sliding contact with the protruding-side portions of the sliding parts 75 while moving outwardly. Then, the locking body 70 is biased toward the locking body holding groove 64 of the holding member 60 in the lower portion. This biasing force acts as the force for pushing the intermediate wire portion 70a outwardly so as to be locked with the corresponding mounting member 18.

As described above, the locking body 70 is held on the mounting plate 40 in such a manner that the biasing force acts in the direction in which the locking body 70 is locked with each of the mounting members 18.

In the state in which the locking body 70 is moved upwardly to abut against the step 44s, the position of the locking body holding groove 64 of the holding member 60 and the position of the step 44s are set such that the pair of side wire portions 70b do not become detached from the locking body holding grooves 64 of the corresponding holding members 60. This prevents the locking body 70 from becoming detached inadvertently.

It is preferable that in the state in which the locking body 70 is mounted, more than a half of the cross section of the locking body 70 should not protrude from the surface of the inflator mounting plate part 44 on the airbag 32 side. In other words, it is preferable that more than a half of the cross section of the locking body 70 be located on the airbag 32 side with respect to the surface of the inflator mounting plate part 44 on the airbag 32 side.

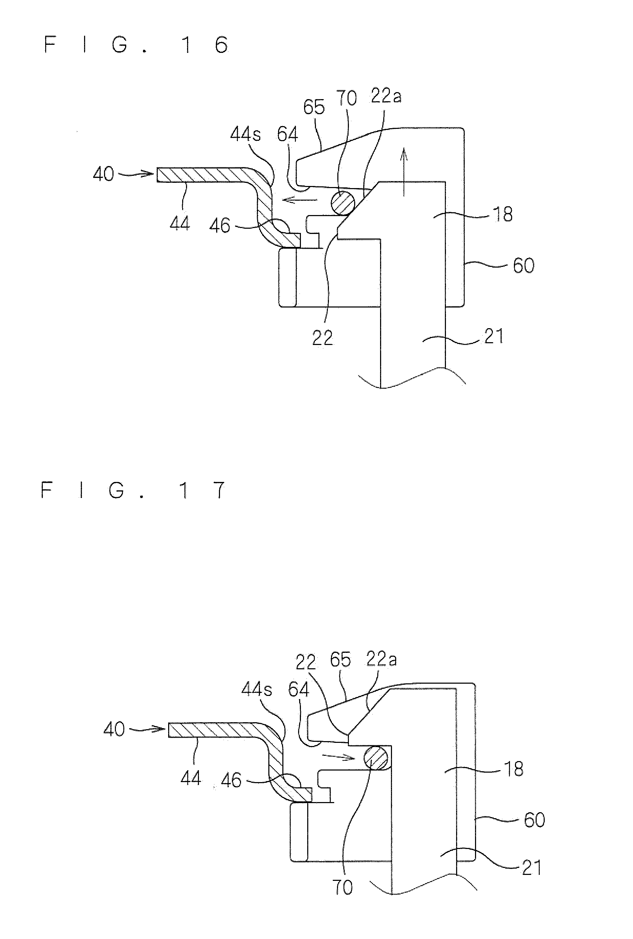

FIG. 14 is a front view showing a state in which the mounting plate 40 is mounted to the steering wheel 10, FIG. 15 is a cross-sectional view taken along the line XV-XV of FIG. 14, and FIGS. 16 and 17 are explanatory views showing the operation in which the mounting member 18 is locked with the locking body 70. For the sake of description, FIGS. 16 and 17 show the mounting body member 20 and the cap member 24 integrated with each other.

As shown in these figures, each mounting member 18 is inserted into the holding member 60 secured to the mounting plate 40 from the steering wheel 10 side, to thereby being locked with the locking body 70 in the holding member 60.

That is, the airbag device 30 is pushed toward the steering wheel 10 such that each mounting member 18 is inserted into the holding member 60 corresponding thereto. Then, the inclined surface 22a at the distal end portion of the mounting member 18 comes into contact with the locking body 70 (see FIG. 16). Accordingly, the locking body 70 is elastically deformed so as to be pushed toward the inside thereof by the inclined surface 22a. Then, the locking body 70 returns elastically after going beyond the locking protrusion 22 of the mounting member 18 (see FIG. 17). Then, the locking body 70 abuts against the corner portion inside the column part 21 and the locking protrusion 22 and is locked therewith (see FIG. 15). The above is performed collectively or sequentially between the plurality of mounting members 18 and the portions of the locking body 70 in the corresponding holding members 60. Accordingly, the locking body 70 is locked so as not to slip off in the holding members 60 corresponding to the plurality of mounting members 18, resulting in that the airbag device 30 is mounted and secured to the steering wheel 10.

The airbag device 30 is set such that in the state in which the locking body 70 is mounted, the first mounting member 18A and the pair of second mounting members 18B cannot be released from the locking body 70 in a collective manner by the movement of the locking body 70 along the main surface of the mounting plate 40. In consideration of the shape, size, and the like of the locking body 70, such setting is achieved by appropriately adjusting the mode in which the first mounting member 18A and the pair of second mounting members 18B are locked with the locking body 70, the mode in which the pair of inclined portions for biasing 70b2 abut against the pair of auxiliary biasing members 74, and the range in which the locking body 70 is movable along the main surface of the mounting plate 40.

The mode in which the first mounting member 18A and the pair of second mounting members 18B are locked with the locking body 70 includes, for example, the position of the second mounting member 18B, and the shape and protruding dimension of the locking protrusion 22 being a main portion that is hooked with the locking body 70. For example, a large protruding dimension of the locking protrusion 22 makes it difficult to release the locking of the locking body 70. Meanwhile, a small protruding dimension of the locking protrusion 22 makes it easy to release the locking of the locking body 70.

The mode in which the pair of inclined portions for biasing 70b2 abut against the pair of auxiliary biasing members 74 includes the angle of inclination of the inclined portion for biasing 70b2 with respect to the linear portion 70b1 and the positions at which the pair of inclined portions for biasing 70b2 are in contact with the pair of auxiliary biasing members 74 (for example, the position refers to a vertical distance from the linear portion 70b1 or the distance from the boundary between the linear portion 70b1 and the inclined portion for biasing 70b2). This is because if those described above change, the amounts of displacement of the pair of side wire portions 70b with respect to the pair of second mounting members 18B fluctuate in the case where the locking body 70 is moved, which affects ease of releasing the second mounting member 18B from the locking body 70.

The range in which the locking body 70 is movable along the main surface of the mounting plate 40 is set by, for example, the recess 46. That is, the step 44s that defines the recess 46 is located within the locking body 70 and, if the locking body 70 is moved along the main surface direction of the mounting plate 40, the locking body 70 abuts against the step 44s, which restricts the movable range thereof. If the movable range of the locking body 70 is restricted, the mode in which the pair of inclined portions for biasing 70b2 and the pair of auxiliary biasing members 74 come into sliding contact with each other is restricted as well, which enables to prevent the locking between the locking body 70 and the second mounting member 18B from being released.

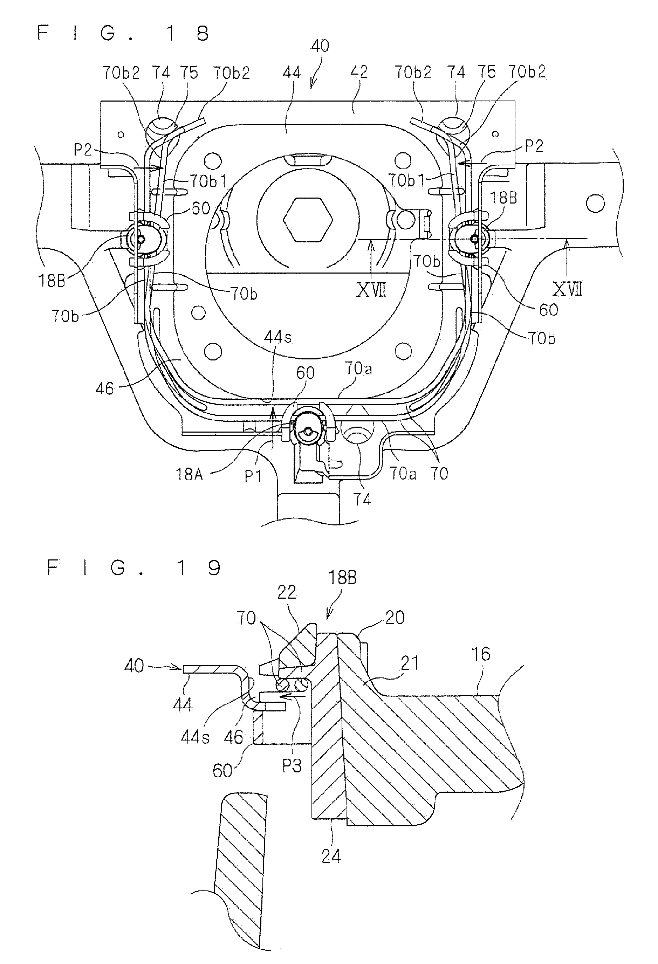

For example, in the normal state, the locking body 70 abuts against and is locked with the corner portion inside of the column part 21 and the locking projection 22, as shown in FIGS. 18 and 19. In this state, the locking body 70 is moved upwardly along the main surface of the mounting plate 40 (see an arrow P1). Then, the inclined portions for biasing 70b2 come into sliding contact with the auxiliary biasing members 74, so that the side wire portions 70b are brought closer to each other (see an arrow P2). Accordingly, the locking body 70 attempts to move toward the distal-end-portion side of the locking protrusion 22 (see an arrow P3). However, the intermediate wire portion 70a abuts against the downwardly facing surface of the step 44s of the recess 46 during moving, and is prevented from moving upwardly. Then, the locking body 70 stops while moving toward the distal-end-portion side of the locking protrusion 22, and is kept in the state of being locked with the locking protrusion 22. This prevents the locking between the locking body 70 and the pair of second mounting members 18B from being released.

Assume that such a force as to push one of the connecting portions between the intermediate wire portion 70a and the pair of side wire portions 70b is exerted. Even in such a case, the locked state between one of the pair of second mounting members 18B and the locking body 70 is kept if the locking between the other of the pair of second mounting members 18B and the locking body 70 is released. Therefore, the pair of second mounting members 18B and the locking body 70 are prevented from being released simultaneously.

It was considered how the locked state between the second mounting member 18B and the locking body 70 would change by changing the position of the mounting member 18B and the angle of inclination of the inclined portion for biasing 70b2.

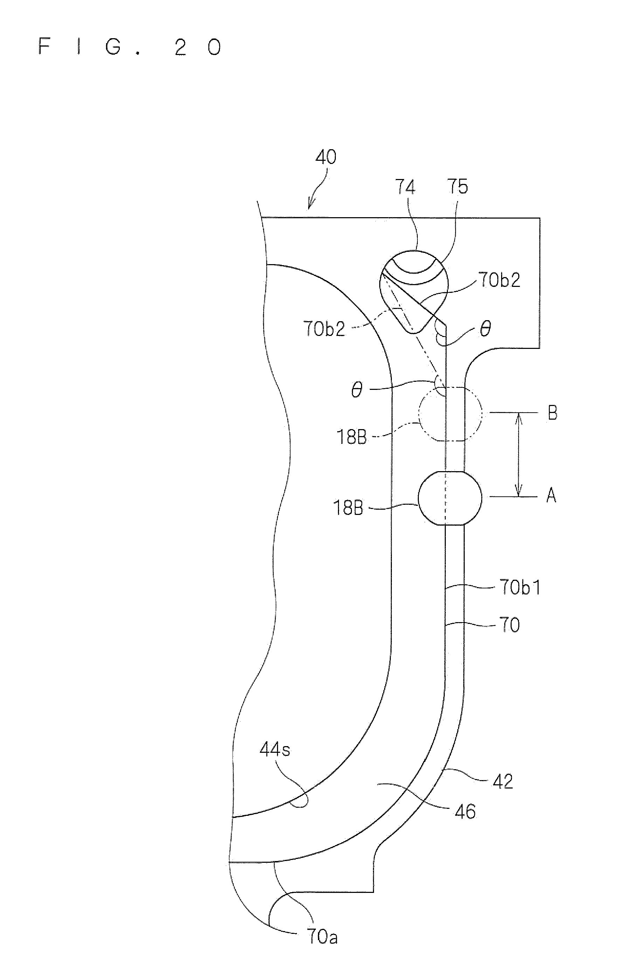

First, the cases where the second mounting member 18B is located at a position A and a position B as shown in FIG. 20 are considered here. The position B is located at a position closer (in this case, by 15 mm) to the end portion side of the side wire portion 70b with respect to the position A. Consideration is made by varying the angle of inclination θ of the inclined portion for biasing 70b2 to 120°, 125°, 130°, 135°, 140°, 145°, and 150°. The angle of inclination θ of the inclined portion for biasing 70b2 is the angle of inclination with respect to the linear portion 70b1. It is assumed that the width of the locking body 70 (distance between the linear portions 70b1) is 114.6 mm and the locking body 70 moves for 6.5 mm until the intermediate wire portion 70a abuts against the step 44s. The locked state between the second mounting member 18B and the locking body 70 is evaluated by the engagement length of the locking body 70 with the second mounting member 18B (distance between the distal end of the locking protrusion 22 and the locking body 70).

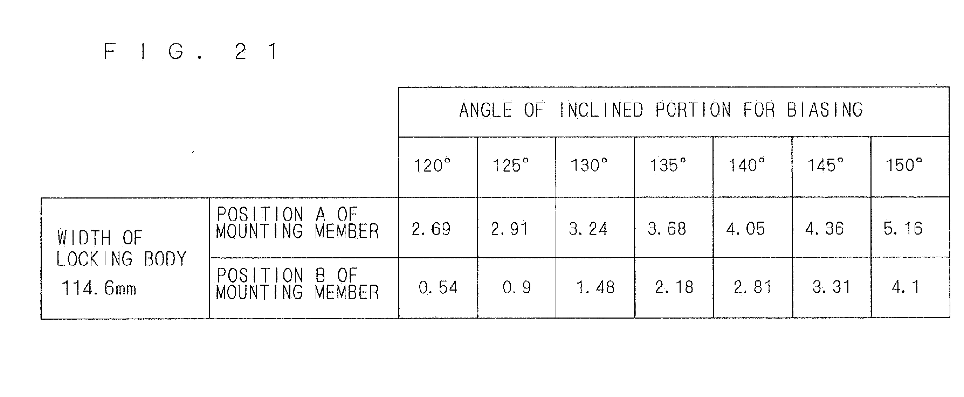

The results of consideration are as shown in FIG. 21. It is revealed that in the case where the second mounting member 18B is located at the position B, that is, if the second mounting member 18B is closer to the auxiliary biasing member 74, the engagement length becomes small and acts in the direction in which the locking between the second mounting member 18B and the locking body 70 is likely to be released. Meanwhile, it is revealed that if the angle θ of the inclined portion for biasing 70b2 is large, the engagement length becomes large and acts in the direction in which the locking between the second mounting member 18B and the locking body 70 is unlikely to be released.

As in the one example of consideration above, the mode in which the first mounting member 18A and the pair of second mounting members 18B are locked with the locking body 70, the mode in which the pair of inclined portions for biasing 70b2 abut against the pair of auxiliary biasing members 74, and the range in which the locking body 70 is movable along the main surface of the mounting plate 40 are appropriately adjusted in consideration of the shape, size, and the like of the locking body 70, which enables the setting so as to prevent the first mounting member 18A and the pair of second mounting members 18B from being collectively released from the locking body 70.

In the case where the airbag device 30 is demounted from the steering wheel 10 as desired, it suffices that the locking body 70 is successively pushed inside the holding members 60 to successively release the locking.

In the state where the airbag device 30 is mounted, the springs 79 are arranged between the core member 16 of the steering wheel 10 and the mounting plate 40 in a compressed state. The springs 79 serve to bias the mounting plate 40 in a direction in which the mounting plate 40 becomes apart from the core member 16 of the steering wheel 10. The biasing force prevents rattling between the core member 16 of the steering wheel 10 and the mounting plate 40.

Further, in the normal state, the biasing force keeps the core member 16 of the steering wheel 10 and the mounting plate 40 in a non-contact state. In the present embodiment, with the use of the above, a horn switch structure is incorporated in the core member 16 of the steering wheel 10 and the mounting plate 40.

That is, at least one securing-side contact part 16a is provided in the core member 16 so as to be exposed to the mounting plate 40 side. The present embodiment assumes the case in which three securing-side contact parts 16a are provided, though FIG. 1 shows only one of them. In addition, moving-side contact parts 40a are provided at the positions opposed to the securing-side contact parts 16a in the mounting plate 40 (see FIGS. 1, 8, and 9). There is incorporated a horn blow circuit that is turned on/off by the securing-side contact parts 16a and the moving-side contact parts 40a. In the state in which the airbag device 30 is mounted to the steering wheel 10, the securing-side contact part 16a and the moving-side contact part 40a are not in contact with each other by the biasing force of the spring 79, which are in a non-conductive state. When a driver pushes the cover 36 in this state, the mounting plate 40 is pushed toward the core member 16 side of the steering wheel 10 against the biasing force of the spring 79. As a result, the moving-side contact part 40a comes into contact with the corresponding securing-side contact part 16a, and they enter a conductive state. This makes a horn blow.

Needless to say, the horn switch structure is not required to be incorporated in this portion, but a horn switch may be incorporated in the surface portion of the cover 36.

According to the airbag device 30 configured as described above, the intermediate wire portion 70a is biased in the direction of being locked with the first mounting member 18A by the abutment of the pair of inclined portions for biasing 70b2 of the locking body 70 against the pair of auxiliary biasing members 74. The biasing force thereof enables to hold the intermediate wire portion 70a and the first mounting member 18A in the locked state. Accordingly, differently from the conventional case, it is not required to hold a wire and the like by means of, for example, a rib formed so as to surround the outer periphery. This enables to hold the locking body 70 at fewer positions (in this case, the positions at which the holding member 60 is in contact with the auxiliary biasing member 74) in the state of being locked with the first mounting member 18A. This results in an increase of the degree of freedom in design of the airbag device 30 as well as a reduction of material cost.

The locking body 70 is not detached from the first mounting member 18A and the pair of second mounting members 18B in a collective manner even when the locking body 70 moves along the main surface of the mounting plate 40, whereby the state in which the airbag device 30 is mounted can be kept more reliably.

The pair of second mounting members 18B are locked with the locking body 70 from the outside on both sides thereof, which enables the design by predicting the effect when the airbag 32 is inflated and deployed. That is, the behavior of the airbag 32 when being inflated and deployed is easy to predict on the side thereof but difficult to predict obliquely thereabove or therebelow in terms of the typical bellows-like or roll-like shape in which the airbag 32 is folded. Therefore, if the pair of second mounting members 18B are locked with the locking body 70 from the outside on both sides thereof, it is easy to design a shape or the like by predicting the effect when the airbag 32 is inflated and deployed. In addition, the pair of second mounting members 18B are locked with the locking body 70 from the direction different from the direction in which the first mounting member 18A is locked therewith, whereby it is possible to hold the locking body 70 in at least three positions by the first mounting member 18A and the pair of second mounting members 18B. This enables to hold the locking body 70 with stability.

### <Modifications>

An auxiliary biasing member may be inclined outwardly or inwardly with respect to the pair of side wire portions.

The linear portions of a pair of side wire portions are not necessarily required to be parallel to each other in the state of being mounted to a mounting plate.

A second mounting member may be locked with the side wire portion 70b from the inside or outside thereof.

The main mounting plate part 42 is not necessarily required to be locked with the locking body 70 at the position of the holding member 60. A mounting member may be locked with a locking body at, for example, a laterally-directed position of a holding member.

The present embodiment has described the example in which the locking body 70 is located on the steering wheel 10 side with respect to the mounting plate 40, which is not necessarily required. A locking body may be provided on the steering wheel side with respect to a mounting plate.

The spring 79 is not necessarily required. For example, the spring 79 itself may not be provided in a case where the switch structure is not incorporated. Alternatively, a spring may be replaced with another elastic member such as rubber.

While the invention has been shown and described in detail, the foregoing description is in all aspects illustrative and not restrictive. It is therefore understood that numerous modifications and variations can be devised without departing from the scope of the invention.

### Description of Reference Symbols

- 10: steering wheel
- 16: core member
- 18: mounting member
- 18A: first mounting member
- 18B: second mounting member
- 30: airbag device
- 32: airbag
- 34: inflator
- 36: cover
- 40: mounting plate
- 44s: step
- 46: recess
- 60: holding member
- 70: locking body
- 70a: intermediate wire portion
- 70b: side wire portion
- 70b1: linear portion
- 70b2: inclined portion for biasing
- 74: auxiliary biasing member
- 75: sliding part

## Claims

1. An airbag device that is mounted to a steering wheel in which a first mounting member is provided in a protruding manner, comprising:
an airbag;
an inflator configured to inflate and deploy said airbag;
a cover covering said airbag folded;
a mounting plate to which said airbag, said inflator, and said cover are secured;
a locking body formed of a linear material configured to be elastically deformed into a shape in which an intermediate linear portion and a pair of side linear portions are continuous so as to form a U-like shape, in which said first mounting member is locked with said intermediate linear portion from an outer peripheral side thereof; and
a holding member holding said locking body on said mounting plate, wherein:
each of end portions of said pair of side linear portions is formed as an inclined portion for biasing that is inclined toward a direction in which said intermediate linear portion is locked with said first mounting member;
a pair of auxiliary biasing members configured to respectively abut against a pair of said inclined portions for biasing are provided in said mounting plate; and
said locking body is held on said mounting plate via said holding member in a state in which said pair of inclined portions for biasing respectively abut against said pair of auxiliary biasing members to bias said intermediate linear portion toward a direction of being locked with said first mounting member.

2. The airbag device according to claim 1, wherein:
said locking body is provided so as to allow a pair of second mounting members provided in said steering wheel in a protruding manner to be respectively locked with said pair of side linear portions; and
a mode in which said first mounting member and said pair of second mounting members are locked with said locking body, a mode in which said pair of inclined portions for biasing abut against said pair of auxiliary biasing members, and a range in which said locking body is movable along a main surface of said mounting plate are set so as to prevent said first mounting member and said pair of second mounting members from being collectively released from said locking body upon said locking body moving along the main surface of said mounting plate.

3. The airbag device according to claim 1 or 2, wherein:
said mounting plate includes a recess that is recessed from a portion for mounting said inflator, and said locking body is provided in said recess; and
a movable range of said locking body in said recess along the main surface of said mounting plate is restricted such that at least one of said first mounting member and said pair of second mounting members is kept in a state of being locked with said locking body.

4. The airbag device according to any one of claims 1 to 3, wherein:
said locking body is provided so as to allow said pair of second mounting members provided in said steering wheel in a protruding manner to be respectively locked with said pair of side linear portions;
each of said pair of side linear portions includes a linear portion and said inclined portion for biasing, said linear portions being parallel to each other in the state of being locked with said pair of second mounting members; and
said pair of second mounting members are configured to be respectively locked with the linear portions of said pair of side linear portions.
